# EUROPEAN PATENT APPLICATION

(11) **EP 2 172 118 A2**
(43) Date of publication of application: **07.04.2010**
(21) Application number: 09162642.4
(22) Date of filing: 13.06.2007
(51) Int. Cl.: A23L 2/52, B65D 51/28, A23L 2/68

(54) **Fluid compositions comprising polyphenols and methods for making and packaging the same**

(30) Priority: 13.06.2006 US 813147 P
(62) Divisional of application: 07796042.5
(71) Applicant: IdeaMed LLC, Atlanta, Georgia 30313 (US)
(72) Inventor: Feller, Frederick, III, Maple Grove MN 55311 (US); Yadav, Jay S., Atlanta GA 30327-4830 (US); Lamps, Gregory, Atlanta GA 30082 (US)
(74) Representative: Boff, James Charles

(57) **Abstract**

A beverage package for a beverage comprising an aqueous solution and a polyphenol containing compound comprises a reservoir capable of isolating the polyphenol containing compound from the aqueous solution until the time of consumption.

## Description

### PRIOR RELATED APPLICATION DATA

The present application claims priority to United States Provisional Patent Application Serial Number 60/813,147 filed June 13, 2006.

### FIELD OF THE INVENTION

The present invention relates to compositions comprising polyphenols and, in particular, to compositions comprising resveratrol.

### BACKGROUND OF THE INVENTION

Trans-resveratrol and other naturally occurring polyphenols are believed to have a number of potential health benefits. Such benefits include protective effects against cardiovascular disease, neurodegeneration, and cancer. Trans-resveratrol and other plant phenols have also been shown to stimulate SIRT1, a sirtuin enzyme. It has been reported that increasing the activity level of SIRT1 increases life spans in a diversity of organisms.

Trans-resveratrol is reported to occur in European red wines in amounts on the order of 0.5-5 mg/L. Additionally, pinot noir wines from the New York region are reported to contain up to 10 mg/L of trans-resveratrol. Moreover, trans-resveratrol quantities in non-alcoholic red wines are reported to be less than 4 mg/L.

Other polyphenols, both flavenoids and non-flavenoids, present in red wines include trans-piceattanol, fisetin, luteolin, kaempferol, quercetin, apigenin, naringenin, (+)-catechin, (-)-epicatechin, morin, and cis-resveratrol.

Although a good source for polyphenols, including trans-resveratrol, red wines may be unattractive to some groups of individuals due to its alcohol content. These groups of individuals can include people who are taking medications for which alcohol consumption is contraindicated, individuals that suffer from alcohol dependencies, people who suffer from depression, pregnant mothers, adolescents, and people that abstain from alcohol consumption as part of their preferred lifestyle.

As provided herein, the polyphenol content of non-alcoholic beverages is significantly less than that of alcoholic beverages. Moreover, the solubility and stability of polyphenols, specifically trans-resveratrol, in non-alcoholic, non-fermented aqueous solutions at concentrations comparable to quantities present in red wine have not been realized.

### SUMMARY

In view of the foregoing, the present invention provides a number of compositions, including non-alcoholic and non-fermented aqueous solutions comprising trans-resveratrol and/or other polyphenols. In another aspect, the present invention provides retail or commercially available beverages comprising trans-resveratrol and/or other polyphenols. The present invention additionally provides packaging operable to maintain the stability of trans-resveratrol in an alcohol-free, aqueous solution. The packaging may also be operable to maintain an acceptable level of trans-resveratrol stability between the time ofpackaging and the time of consumption or use of the trans-resveratrol solution. In a further aspect, the present invention provides methods of producing aqueous solutions and/or retail beverages comprising trans-resveratrol as well as methods of increasing the solubility of trans-resveratrol in aqueous solution.

These and other embodiments are described in greater detail in the following detailed description of the disclosed embodiments and claims.

### BRIEF DESCRIPTION OF THE DRAWINGS

Figure 1 illustrates packaging for a composition comprising one or more polyphenols according to one embodiment of the present invention.
Figure 2 is a photomicrograph of an aqueous solution comprising trans-resveratrol according to one embodiment of the present invention.
Figure 3 is a photomicrograph of an aqueous solution comprising trans-resveratrol and ascorbic acid according to one embodiment of the present invention.
Figure 4 is a photomicrograph of an aqueous solution comprising trans-resveratrol and ascorbic acid according to one embodiment of the present invention.
Figure 5 is a photomicrograph of an aqueous solution comprising trans-resveratrol according to one embodiment of the present invention.
Figure 6 is a photomicrograph of an aqueous solution comprising trans-resveratrol and ascorbic acid according to one embodiment of the present invention.
Figure 7 is a photomicrograph of an aqueous solution comprising trans-resveratrol and ascorbic acid according to one embodiment of the present invention.

### DETAILED DESCRIPTION

The present invention provides a number of compositions, including non-alcoholic and/or non-fermented aqueous solutions comprising trans-resveratrol and/or other polyphenols.

In one embodiment, the present invention provides a fluid composition comprising an aqueous solution comprising trans-resveratrol in an amount greater than 30 mg/L. In some embodiments, an aqueous solution comprises trans-resveratrol in an amount ranging from greater than 30 mg/L up to about 300 mg/L. In another embodiment, an aqueous solution comprises trans-resveratrol in an amount ranging from about 50 mg/L to about 200 mg/L or from about 100 mg/L to about 150 mg/L. In one embodiment, an aqueous solution comprises trans-resveratrol in an amount greater than about 300 mg/L. In a further embodiment, a fluid composition comprises an aqueous solution comprising trans-resveratrol in an amount greater than 5 mg/L to about 30 mg/L.

In some embodiments, an aqueous solution comprising trans-resveratrol in any of the amounts provided herein, comprises ethanol in an amount less than about 5 percent by volume. In other embodiments, an aqueous solution comprises ethanol in an amount less than about 2 percent by volume. In another embodiment, an aqueous solution comprising trans-resveratrol in any of the amounts recited herein comprises ethanol in an amount less than about 1 percent by volume. In a further embodiment, an aqueous solution comprises ethanol in an amount less than about 0.5 percent by volume. In one embodiment, an aqueous solution comprising trans-resveratrol in any of the amounts provided herein does not comprise ethanol and/or other alcohol(s).

In another aspect, an aqueous solution comprising trans-resveratrol in any of the amounts provided herein further comprises at least one stabilizing agent. In one embodiment, an aqueous solution comprises a plurality of stabilizing agents. Stabilizing agents, according to embodiments of the present invention, comprise chemical species operable to enhance the stability of trans-resveratrol in aqueous solution by inhibiting or preventing the geometric isomerization of trans-resveratrol to the cis-isomer. In some embodiments, stabilizing agents minimize and/or eliminate elements or species that facilitate the conversion of trans-resveratrol to cis-resveratrol.

In some embodiments, stabilizing agents comprise nitrogen, carbon dioxide, or mixtures thereof. In other embodiments, stabilizing agents comprise vitamin A, vitamin C, vitamin E, or mixtures thereof. In some embodiments, an aqueous solution comprising trans-resveratrol comprises vitamin C in an amount of up to about 1000 mg/L. In another embodiment, an aqueous solution comprising trans-resveratrol comprises vitamin A in an amount ranging from about 1 to about 6,250 International Units (IU's) or from about 2,100 IU's to about 4,200 IU's. In a further embodiment, an aqueous solution comprising trans-resveratrol comprises vitamin E in an amount ranging from about 1 to about 125 IU's or from about 12.5 to about 125 IU's.

Stabilizing agents, in another embodiment, comprise chemical species operable to absorb ultraviolet (UV) radiation and/or otherwise inhibit free radicals. Chemical species operable to absorb UV radiation, in some embodiment, comprise alpha lipoic acid, β-carotene, lycopene, lutein, zeaxanthin, astanxanthin, anthrocyanidins, catechins, epicatechins, procyanidins, quercetin, pycnogenol, sulforaphane, ellagic acid, caffeic acid, chlorogenic acid, tannic acid, diallyl sulfide, dithiolthiones, allyl methyl trisulfide, vitamin A, vitamin E, co-enzyme Q10, BHA, BHT, tocopherols, sulfites, rosemary extracts, or mixtures thereof

In view of the importance of trans-resveratrol solution stability and the susceptibility of trans-resveratrol to geometric isomerization to the cis-isomer, an aqueous solution, in some embodiments of the present invention, can comprise trans-resveratrol in any amount recited herein for a time period of at least six months from the preparation of the aqueous solution. In one embodiment, for example, an aqueous solution comprises greater than 30 mg/L up to about 300 mg/L of trans-resveratrol at least six months after preparation of the aqueous solution. In another embodiment, for example, an aqueous solution comprises trans-resveratrol in an amount greater than 5 mg/L to about 30 mg/L at least six months after preparation of the solution. In another embodiment, an aqueous solution comprises trans-resveratrol in any amount provided herein for a time period of at least 9 months after preparation of the solution.

In some embodiments, an aqueous solution comprising trans-resveratrol in any of the amounts recited herein further comprises other polyphenols including, but not limited to, trans-piceattanol, fisetin, luteolin, kaempferol, quercetin, apigenin, naringenin, (+)-catechin, (-)-epicatechin, morin, and cis-resveratrol. In other embodiments, aqueous solutions comprising trans-resveratrol do not comprise cis-resveratrol.

In some embodiments, emulsifying agents are employed to further enhance the dispersion of trans-resveratrol in aqueous solution. Suitable emulsifying agents, in some embodiments, comprise calcium carbonate, lecithin, methylcellulose, mono- and diglycerides, pectin and phosphoric acid.

Aqueous solutions comprising trans-resveratrol, in some embodiments, have a pH ranging from about 2.5 to about 7. In other embodiments, aqueous solutions comprising trans-resveratrol have a pH ranging from about 2.5 to about 4.5. In a further embodiment, aqueous solutions comprising trans-resveratrol have a pH ranging from about 3 to about 4.

In another aspect, the present invention provides retail beverages comprising trans-resveratrol. In one embodiment, the present invention provides a retail beverage comprising trans-resveratrol in an amount ranging from about 5 mg/L to about 300 mg/L, wherein the retail beverage is non-alcoholic. The term "non-alcoholic", as used herein, refers to an alcohol (ethanol) content of the beverage less than about 0.5% by volume. In another embodiment, a non-alcoholic retail beverage comprises trans-resveratrol in an amount ranging from about 10 mg/L to about 300 mg/L or from about 30 mg/L to about 250 mg/L. In some embodiments, a non-alcoholic retail beverage comprises trans-resveratrol in an amount ranging from about 50 mg/L to about 200 mg/L or from about 75 mg/L to about 150 mg/L. In a further embodiment, a non-alcoholic retail beverage comprises trans-resveratrol in an amount ranging from about 10 mg/L to about 30 mg/L. In one embodiment, a non-alcoholic retail beverage comprises trans-resveratrol in an amount greater than 300 mg/L. In some embodiments, a non-alcoholic retail beverage comprising trans-resveratrol has 0 percent alcohol by volume.

In another embodiment, a non-alcoholic retail beverage comprising trans-resveratrol in any of the amounts provided herein further comprises at least one stabilizing agent. In some embodiments, a non-alcoholic retail beverage comprises a plurality of stabilizing agents. In some embodiments, stabilizing agents for use in retail beverages comprising trans-resveratrol comprise vitamin A, vitamin C, vitamin E, or combinations thereof. In one embodiment, a non-alcoholic retail beverage comprising trans-resveratrol further comprises vitamin C in an amount of up to about 1000 mg/L. In another embodiment, a non-alcoholic retail beverage comprising trans-resveratrol further comprises vitamin A in an amount ranging from about 1 to about 6,250 IU's or from about 2,100 to about 4,200 IU's. In a further embodiment, a non-alcoholic retail beverage comprising trans-resveratrol further comprises vitamin E in an amount ranging from about 1 to about 125 IU's or from about 12.5 to about 125 IU's.

In another embodiment, stabilizing agents suitable for use in non-alcoholic retail beverages comprising trans-resveratrol comprise chemical species operable to absorb ultra-violet radiation.

In view of the importance of trans-resveratrol solution stability and the susceptibility of trans-resveratrol to geometric isomerization to the cis-isomer, a non-alcoholic retail beverage, in some embodiments of the present invention, can comprise trans-resveratrol in any amount recited herein for a time period of at least six months from the preparation of the non-alcoholic retail beverage. In one embodiment, for example, an aqueous solution comprises from about 5 mg/L up to about 300 mg/L of trans-resveratrol at least six months after the aqueous solution is prepared. In another embodiment, for example, a non-alcoholic retail beverage comprises trans-resveratrol in an amount greater than 5 mg/L to about 30 mg/L at least six months after preparation of the non-alcoholic retail beverage. In another embodiment, a non-alcoholic retail beverage comprises trans-resveratrol in any amount provided herein for a time period of at least 9 months after preparation of the solution.

In some embodiments, a non-alcoholic retail beverage comprising trans-resveratrol in any of the amounts provided herein further comprises other polyphenols including, but not limited to, trans-piceattanol, fisetin, luteolin, kaempferol, quercetin, apigenin, naringenin, (+)-catechin, (-)-epicatechin, morin, and cis-resveratrol. In other embodiments, non-alcoholic retail beverages comprising trans-resveratrol do not comprise cis-resveratrol. In another embodiment, a non-alcoholic retail beverage comprising trans-resveratrol, in some embodiments, further comprises protein. In some embodiments, a non-alcoholic retail beverage comprising trans-resveratrol further comprises vitamins, minerals, and/or other nutrients. A non-alcoholic retail beverage comprising trans-resveratrol, in some embodiments, further comprises at least one flavoring agent.

In some embodiments, a non-alcoholic retail beverage further comprises one or a plurality of flavoring agents. Flavoring agents, according to embodiments of the present invention, comprise natural flavoring agents, synthetic/artificial flavoring agents, or combinations thereof. Flavoring agents, in some embodiments, comprise ethyl acetoacetate, acetophenone, anisaldehyde, α-amyl cinnamaldehyde, methyl anthranilate, ionone, isoeugenol, isoamyl isovalerate, ethyl isovalerate, allyl isothiocyanate, γ-udecalactone, ethylvanill, eugenol, octana, ethyl octanoatel, isoamyl formate, geranyl formate, citronellyl formate, cinnamic acid, ethyl cinnamate, methyl cinnamate, geraniol, isoamyl acetate, ethyl Acetate, geranyl acetate, cyclohexyl acetate, citronellyl acetate, cinnamyl acetate, terpinyl acetate, phenethyl acetate (phenylethyl acetate), butyl acetate, benzyl acetate, 1-menthyl acetate, or linalyl acetate, or combinations thereof. In other embodiments, flavoring agents comprise methyl salicylate, allyl cyclohexylpropionate, citral, citronellal, citronellol, 1,8-cineole (eucalyptol), cinnamyl alcohol (cinnamic alcohol), cinnamaldehyde (cinnamic aldehyde), decanal (decyl aldehyde), decanol (decyl alcohol), ethyl dicanoate (ethyl caprate), terpineol, γ-nonalactone (nonalactone), vanillin, p-methylacetophenone, hydroxycitonellal, hydroxycitronellal dimethylacetate, piperonal (heliotropine), isoamyl phenlacetate, isobutyl phenylacetate, ethyl penylacetate, propionic acid, isoamyl propionate, ethyl propionate, benzyl propionate, hexanoic acid (caproic acid), allyl hexanoate (allyl caproate), ethyl hexanoate (ethyl caproate), ethyl heptanoate (ethyl oenanthate), or *l*-perillaldehyde, or combinations thereof. In an further embodiment, flavoring agents comprise benzyl alcohol, benzaldehyde, d-bomeol, maltol, methyl N-methylanthranilate, methyl b-naphthyl ketone, *dl-*menthol (dl-peppermint camphor), *l*-menthol (peppermint camphor), butyric acid, isoamyl butylate, ethyl butyrate, cyclohexyl butyrate, butylrate, or linalool (linalol) or combinations thereof.

Non-alcoholic retail beverages comprising trans-resveratrol, in some embodiments, have a pH ranging from about 3 to about 7. In other embodiments, non-alcoholic retail beverages comprising trans-resveratrol have a pH ranging from about 3.5 to 4.5.

A non-alcoholic retail beverage comprising trans-resveratrol, according to one embodiment, has no calories. In another embodiment, a non-alcoholic retail beverage comprising trans-resveratrol has from about 1 to about 200 calories per serving. In another embodiment, a non-alcoholic retail beverage comprising trans-resveratrol has from about 10 to about 150 or from about 25 to about 100 calories per serving. In a further embodiment, a non-alcoholic retail beverage comprising trans-resveratrol has from about 50 calories to about 75 calories per serving.

A serving size of a non-alcoholic retail beverage comprising trans-resveratrol, in some embodiments, is about 250 ml. In other embodiments, a serving size of a non-alcoholic retail beverage comprising trans-resveratrol is about 355 ml. In another embodiment, a serving size of a non-alcoholic retail beverage comprising trans-resveratrol is about 475 ml or about 500 ml. In a further embodiment, a serving size of a non-alcoholic retail beverage comprising trans-resveratrol is about 1 liter.

Non-alcoholic retail beverages comprising trans-resveratrol in any of the amounts recited herein, in some embodiments, are teas. In other embodiments, a non-alcoholic retail beverage comprising trans-resveratrol is an energy or sports drink operable to replenish electrolytes and/or carbohydrates. In a further embodiment, a non-alcoholic retail beverage comprising trans-resveratrol is yogurt or a "smoothie" type fluid composition. In one embodiment, a non-alcoholic retail beverage comprising trans-resveratrol is a cola or other acidic carbonated soft drink. Yet another embodiment of a non-alcoholic beverage comprising trans-resveratrol is coffee.

Non-alcoholic retail beverages, according to some embodiments of the present invention, are available for purchase at commercial outlets including, but not limited to, grocery stores, drug stores, convenience stores, and/or health specialty stores.

In addition to non-alcoholic retail beverages, the present invention provides retail alcoholic beverages comprising trans-resveratrol. In one embodiment, a retail alcoholic beverage comprises trans-resveratrol in an amount greater than 15 mg/L. In another embodiment, a retail alcoholic beverage comprises trans-resveratrol in an amount ranging from greater than about 15 mg/L to about 2.5 g/L. In some embodiments, a retail alcoholic beverage comprises trans-resveratrol in an amount ranging from about 20 mg/L to about 1 g/L or from about 50 mg/L to about 750 mg/L. In other embodiments, a retail alcoholic beverage comprises trans-resveratrol in an amount ranging from about 100 mg/L to about 500 mg/L or from about 200 mg/L to about 400 mg/L. In a further embodiment, a retail alcoholic beverage comprises trans-resveratrol in an amount greater than about 2.5 g/L.

In some embodiments, a retail alcoholic beverage comprising trans-resveratrol in any of the amounts recited herein is a beer or malt beverage. In other embodiments, a retail alcoholic beverage comprising trans-resveratrol in any of the amounts provided herein is a wine, wherein a wine comprises a white wine, a red wine, or a mixture thereof. In a further embodiment, a retail alcoholic beverage comprising trans-resveratrol in any of the amounts provided herein is a liquor.

Retail alcoholic beverages comprising trans-resveratrol, according to some embodiments, can further comprise any of the additional components provided herein for non-alcoholic retail beverages including, but not limited to, stabilizing agents, additional polyphenols, flavoring agents, and/or emulsifying agents. Moreover, retail alcoholic beverages comprising trans-resveratrol can have caloric contents consistent with those recited herein for non-alcoholic retail beverages.

In view of the importance of trans-resveratrol solution stability and the susceptibility of trans-resveratrol to geometric isomerization to the cis-isomer, an alcoholic retail beverage, in some embodiments of the present invention, can comprise trans-resveratrol in any amount recited herein for a time period of at least six months from the preparation of the alcoholic retail beverage. In one embodiment, for example, a retail alcoholic beverage comprises greater than 15 mg/L up to about 2.5 g/L of trans-resveratrol at least six months after the retail alcoholic beverage is prepared. In another embodiment, for example, a retail alcoholic beverage comprises trans-resveratrol in an amount ranging from about 20 mg/L to about 750 mg/L at least six months after preparation of the retail alcoholic beverage. In another embodiment, a retail alcoholic beverage comprises trans-resveratrol in any amount provided herein for a time period of at least 9 months after preparation of the solution.

Retail alcoholic beverages, according to some embodiments of the present invention, are available for purchase at commercial outlets including, but not limited to, grocery stores, drug stores, convenience stores, health specialty stores, and/or alcohol beverage control establishments.

Trans-resveratrol for use in aqueous solutions, non-alcoholic retail beverages, and retail alcoholic beverages, according to some embodiments of the present invention, can be obtained from a synthesized source or, alternatively, as plant or natural food extract. Methods of trans-resveratrol synthesis and extraction are well known to those in the art. Extraction of trans-resveratrol, for example, can be obtained from grape seeds, grape skin, grape pumace, and Japanese Knotweed (*Polygonum cuspidatum*).

In other embodiments, trans-resveratrol for use in aqueous solutions, non-alcoholic retail beverages, and retail alcoholic beverages of the present invention is in the 3-β-glucoside form of trans-resveratrol. This form of trans-resveratrol is 2-[3-hydroxy-5-[(*E*)-2-(4-hydroxyphenyl)ethenyl]phenoxy]-6-(hydroxymethyl)oxane-3,4,5-triol, otherwise known as polydatin or piceid. As the β-glucosidases in the human intestines hydrolyze the piceid and release free trans-resveratrol, the bioavailability of the trans-resveratrol derived from the β-glucosidic form is equivalent to the free form of trans-resveratrol in solution. Concentrations of piceid in aqueous solutions, retail non-alcoholic, and retail alcoholic beverages of the present invention are determined such that the quantity of free trans-resveratrol released upon hydrolysis remains within the trans-resveratrol ranges set forth herein.

In another aspect, the present invention provides packaging for aqueous solutions, non-alcoholic retail beverages, and retail alcoholic beverages comprising trans-resveratrol operable to enhance the stability of trans-resveratrol in solution by inhibiting geometric isomerization to cis-resveratrol.

Cis-resveratrol exhibits considerably less efficacy in activating SIRT1 as compared to trans-resveratrol. Therefore, it is desirable to ensure the conformational integrity of the more effective trans isomer. To accomplish this, any one or a combination of additives, packaging techniques or devices can be utilized to stabilize trans-resveratrol.

Aqueous solutions and retail beverages disclosed herein comprising trans-resveratrol can be contained within and protected from exposure to UV radiation by a plastic bottle material, e.g., specific grades of polyethylene terephthalate (PET) well known to those in the art, which have specialized additives for blocking a specific range ofUV wavelengths while maintaining a "clear" bottle appearance.

Whether bottled in plastic or glass, colorants can also be added to the plastic or glass bottling material to provide further protection of the contents against UV-degradation. These additives may block or absorb UV light in certain wavelengths.

In another embodiment, aqueous solutions and/or retail beverages of the present invention are packaged in cans including, but not limited to, aluminum cans, steel cans with a polymeric film liner, or multi-layer aseptic paper/plastic packaging such as packaging commercially available from Tetra Pak of Switzerland.

In order to protect trans-resveratrol in a fluid composition from conformational changes due to oxygen exposure, in some embodiments, an anaerobic or substantially anaerobic milieu is provided for. An anaerobic environment, in some embodiments, is accomplished by bottling the beverage in a nitrogen-rich environment and/or by reducing the amount of dissolved oxygen within the water. Reduction of the amount of dissolved oxygen in the water, in some embodiments, is achieved by dissolving nitrogen or carbonation (carbon dioxide) in the water. Some embodiments of the present invention contemplate adding nitrogen and/or carbon dioxide to aqueous solutions and retail beverages comprising trans-resveratrol in amounts sufficient to substantially reduce or eliminate dissolved oxygen within the solutions.

In order to avoid degradation of trans-resveratrol during solution or beverage sterilization, another embodiment of the present invention contemplates the use of acidic fluid compositions comprising trans-resveratrol, e.g., juices, sodas, etc. Utilization of acidic fluid compositions can eliminate the need of utilizing sterilization techniques (e.g. UV radiation exposure, ozone exposure) potentially degradative to trans-resveratrol. Acidic fluid compositions, e.g., sodas, do not require harsh sterilization techniques since the acidity is high enough to prevent microbes from flourishing post-bottling. As provided herein, the pH range of aqueous solutions, non-alcoholic retail beverages, and/or retail alcoholic beverages can range from about 2.5 to about 7, from about 2.5 to about 4.5 or from about 3 to about 4.

As described herein, stabilizing agents comprising natural additives which scavenge oxygen free radicals from the solution can also be incorporated into the beverage. Such additives include, but are not limited to, vitamins A, C and E.

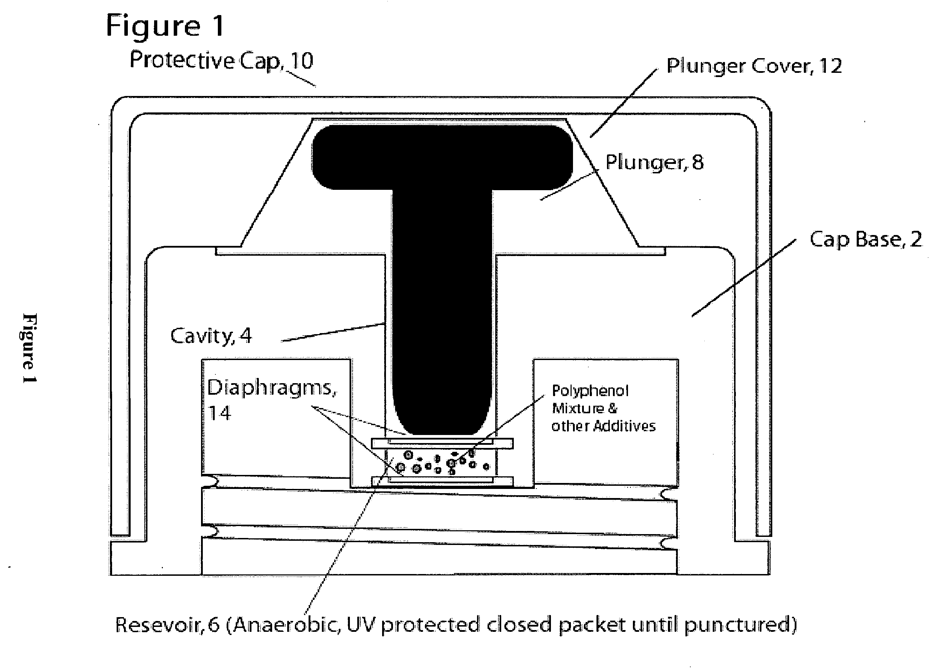

Tn addition to the additives and packaging techniques described above, a packaging device can be utilized to isolate the polyphenol-containing compound from the aqueous environment and UV light until the time of consumption. In one example, shown in Figure 1, a reservoir is provided within a cap which significantly reduces the susceptibility to UV and oxygen degradation. A base 2 is provided and engages the threaded mouth of a bottle (not shown). A cavity 4 is formed though a portion of the base 2. A reservoir 6 containing additive in liquid or powder form is provided at the lowest portion of the cavity 4 in the base 2. This reservoir 6 provides an anaerobic, UV-protected environment for the polyphenol portion of the beverage from packaging until the time of consumption. A movable plunger 8 is positioned above and in close proximity to the reservoir 6. The plunger is sealed within a protected environment by the plunger cover, 12. A protective cap 10 protects the plunger 8 from being advanced during shipping, storage, and handling prior to consumption. The plunger cover 12 and plunger 8 can be pushed or rotated to advance the plunger 8 and rupture diaphragms 14 of the reservoir 6, releasing the polyphenol mixture into the aqueous solution contained within the bottle.

Packaging materials and methods common to the pharmaceutical industry can be used to construct the reservoir 6. For example, reservoir 6 can be a metallic foil pouch. Packaging materials, e.g., plastics, soft elastomers, etc., common to those in the packaging industry can be used to form the protective cap 10, plunger 12, plunger 8, and base 2. The polyphenol mixture into the reservoir can be packaged in a nitrogen or argon environment to reduce the amount of oxygen within the packet. The reservoir 6 can contain trans-resveratrol in powdered form. Alternatively, the reservoir 6 could contain a liquid solution. The liquid solution can provide for more rapid dissolution into the aqueous solution and could, e.g., contain a high concentration of polyphenols in an ethanol or buffered solution. In a further embodiment, the solution within the packet could contain emulsifying agents to facilitate the dispersion into solution.

One mechanism for actuating the release of the contents of the reservoir could be a plunger actuated by application of pressure. Such plunger would be protected from the time of packaging to the time of consumption by a protective outer cap. Imminent to consumption of the fluid composition, the protective cap could be removed and the plunger depressed to rupture the reservoir. This way, the contents of the reservoir are released and the base (a.k.a. primary cap) is still secured, allowing the consumer to agitate the contents of the bottle to ensure adequate dispersion of the solute into the aqueous solution.

Another mechanism to actuate the release of the contents of the reservoir would be a dual-cap mechanism. In this example, a primary cap engages the mouth of the vessel and ensures that the bottle is fluid tight. Another secondary cap is coupled to the primary cap inside the area defined by the perimeter of the primary cap. This secondary cap is threaded such that a plunger coupled to the underside of the cap advances in a direction opposite from that which will disengage the primary cap from the mouth of the bottle. This way, the secondary cap is advanced, rupturing the reservoir and releasing the solute into the solution of the bottle. Again, the primary cap maintains a fluid tight seal so that a consumer may agitate the contents of the bottle to ensure adequate dispersion of the solute into the solution.

In another aspect, the present invention provides methods for packaging aqueous solutions and/or retail beverages comprising trans-resveratrol. In one embodiment, a method for packaging an aqueous solution or retail beverage comprising trans-resveratrol comprises disposing the solution or retail beverage in an anaerobic and UV radiation deficient environment. In one embodiment, an anaerobic and UV radiation deficient environment comprises a sealed reservoir as provided hereinabove.

In a further aspect, the present invention provides methods of increasing the solubility of resveratrol in aqueous solution. In one embodiment, a method of increasing the solubility of resveratrol in an aqueous solution comprises adding ascorbic acid or an enantiomer, salt, or derivative thereof to an aqueous solution comprising the resveratrol. In one embodiment, an enantiomer of ascorbic acid is vitamin C. In another embodiment, salts of ascorbic acid comprise sodium salts, calcium salts, potassium salts, or mixtures thereof.

In some embodiments, resveratrol comprises trans-resveratrol. In other embodiments, resveratrol comprises cis-resveratrol. In a further embodiment, resveratrol comprises the 3-β-glucoside of trans-resveratrol. In one embodiment, resveratrol comprises mixtures of trans-resveratrol, cis-resveratrol, and/or the 3-β-glucoside of trans-resveratrol.

In some embodiments of methods of increasing the solubility of resveratrol in aqueous solution, ascorbic acid or an enantiomer, salt, or derivative thereof is added to an aqueous solution comprising resveratrol in an amount of at least about 10 times the concentration of the resveratrol in the aqueous solution. In other embodiments, ascorbic acid is added to an aqueous solution comprising resveratrol in an amount of at least 100 times the concentration of the resveratrol in the aqueous solution. In another embodiment, ascorbic acid is added to an aqueous solution comprising resveratrol in an amount ranging from about 10 times to about 100 times the concentration of the resveratrol in the aqueous solution. In a further embodiment, ascorbic acid or an enantiomer, salt, or a derivate thereof, is added to an aqueous solution comprising resveratrol in an amount less than about 10 times the concentration of the resveratrol in the aqueous solution.

Embodiments of the present invention a further illustrated in the following nonlimiting examples.

### EXAMPLE 1

### Beverage Comprising Trans-resveratrol

21 L of water purified by reverse osmosis was added to a stainless steel steam-jacketed kettle and heated to about 50°C. 180 g of mono-basic sodium phosphate was added to the water to achieve a 60 mM buffer solution having a pH of about 3. 2.5 g of ascorbic acid was subsequently added to the buffer solution. The pH of the resulting solution can be adjusted to any desired level with the addition of phosphoric acid.

4L of water purified by reverse osmosis was added to a second stainless steel container and heated to about 50°C. 250 mg of trans-resveratrol was added to the 4L of water and dissolved with stirring. The 4L trans-resveratrol solution was subsequently added to the 21L buffered solution. The pH of the resulting solution was checked prior to bottling, and the trans-resveratrol solution was subsequently bottled according to processes known to one of skill in the art.

### EXAMPLE 2

### Beverage Comprising Trans-Resveratrol

A trans-resveratrol concentrate was prepared by adding 4L of water purified by reverse osmosis to a stainless steel vessel. 250 mg of trans-resveratrol, 25 g of ascorbic acid, and 180 g of monobasic sodium phosphate were added to the 4L of water. Dissolution of the trans-resveratrol, ascorbic acid, and sodium phosphate was achieved with stirring to produce the concentrate.

The concentrate is subsequently combined with water in a commercial "hot fill" bottling line. In doing so, the concentrate was diluted with water in a 5.25:1 ratio of water to concentrate. The dilute solution is passed through the high temperature short time (HTST) pasteurization heat exchanger and is filled into the desired bottles. The filled bottles are subsequently capped, are inverted, and are quenched on the manufacturing line.

### EXAMPLE 3

### Increasing the Solubility of Trans-resveratrol in Aqueous Solution

In order to demonstrate the ability of ascorbic acid to increase the solubility of resveratrol in an aqueous solution, three (3) solutions were prepared.

Solution 1 (Trans-resveratrol only) - 100 ml of water was heated to about 90°C in a glass beaker. 8 mg of trans-resveratrol extract (99%, Abatra Lot #0606231) was added to the heated water with a hand blender to produce a solution having a trans-resveratrol concentration of 80 mg/L.

Solution 2 (Trans-resveratrol + ascorbic acid) - 100 ml of water was heated to about 90°C in a glass beaker. 8 mg of trans-resveratrol extract (99%, Abatra Lot #0606231) was added to the heated water with a hand blender to produce a solution having a trans-resveratrol concentration of 80 mg/L. 800 mg of L-ascorbic acid (powder) from BDH, distributed exclusively for VWR, 99.7% pure, lot #45335635, was added to the trans-resveratrol solution with mild stirring to produce an ascorbic acid concentration of 8 g/L.

Solution 3 (Trans-resveratrol + ascorbic acid) - 100 ml of water was heated to about 90°C in a glass beaker. 8 mg of trans-resveratrol extract (99%, Abatra Lot #0606231) was added to the heated water with a hand blender to produce a solution having a trans-resveratrol concentration of 80 mg/L. 80 mg of ascorbic acid (powder) was added to the trans-resveratrol solution with mild stirring to produce an ascorbic acid concentration of 800mg/L.

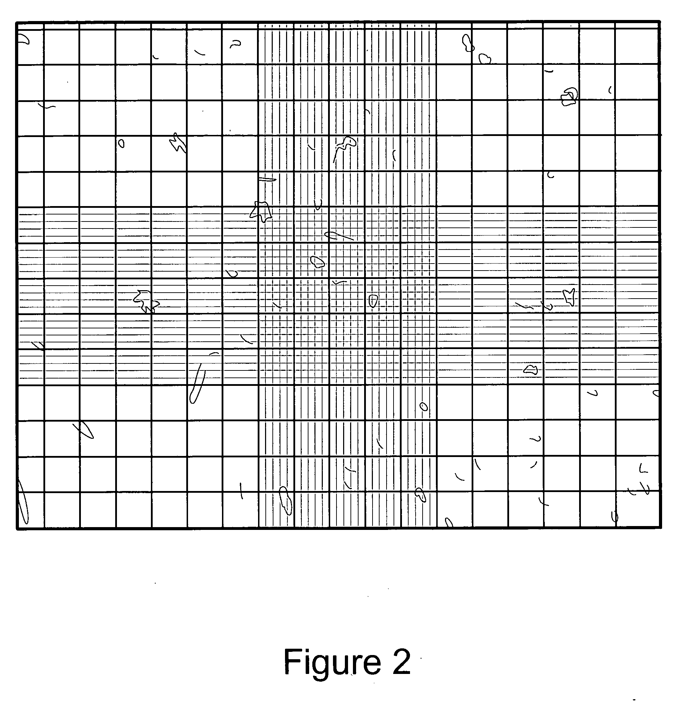

Solutions 1, 2, and 3 were subsequently transferred to separate polypropylene test tubes and frozen. Solutions 1, 2, and 3, were frozen at -20°C for 12 hours. Frozen solutions 1, 2, and 3 were subsequently thawed to room temperature. Twenty-four (24) hours post thaw, photomicrographs were taken of Solutions 1, 2, and 3 by adding a sample of each solution onto a heamocytometer. Figure 2 is a photomicrograph of Solution 1. The volume within the 25 squares in the center is 100 nanoliters. The minor grid lines are spaced 0.05 mm apart. As illustrated in Figure 2, trans-resveratrol particles were present in the solution indicating incomplete solubilization.

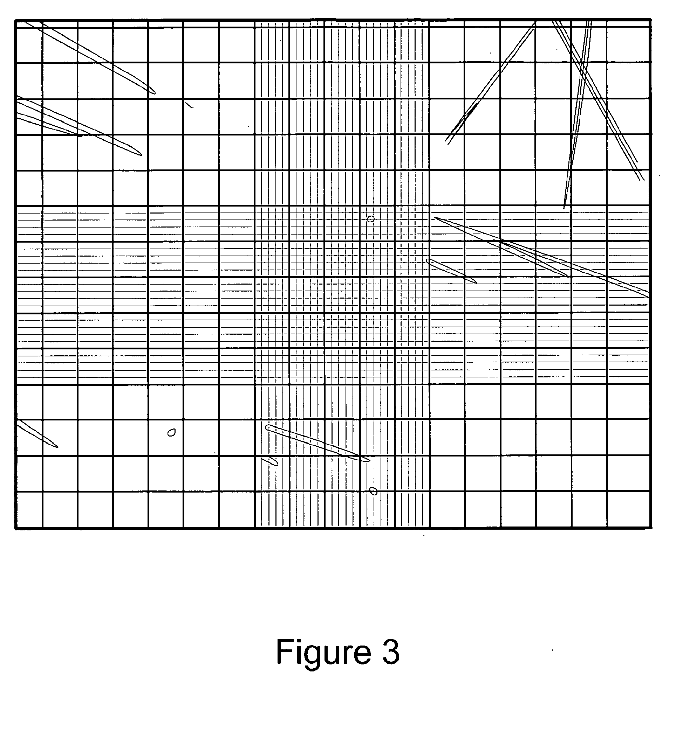

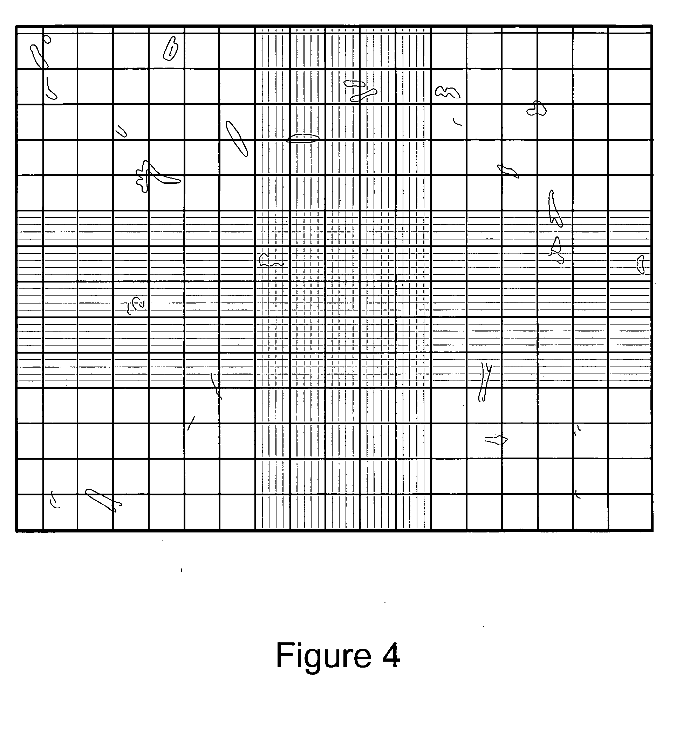

Figure 3 is a photomicrograph of Solution 2. As illustrated in Figure 3, significantly less trans-resveratrol particles are present indicating increased solubilization of the trans-resveratrol. Figure 4, a photomicrograph of Solution 3, additionally demonstrates enhanced solubilization of the trans-resveratrol in comparison to Solution 1.

### EXAMPLE 4

### Increasing the Solubility of Trans-resveratrol in Aqueous Solution

In order to demonstrate the ability of ascorbic acid to increase the solubility of resveratrol in an aqueous solution, three (3) solutions were prepared.

Solution 1 (Trans-resveratrol only) - 100 ml of water was heated to about 90°C in a glass beaker. 6 mg of trans-resveratrol extract (99%, Abatra Lot #0606231) was added to the heated water with a hand blender to produce a solution having a trans-resveratrol concentration of 60 mg/L.

Solution 2 (Trans-resveratrol + ascorbic acid) - 100 ml of water was heated to about 90°C in a glass beaker. 6 mg of trans-resveratrol extract (99%, Abatra Lot #0606231) was added to the heated water with a hand blender to produce a solution having a trans-resveratrol concentration of 60 mg/L. 600 mg of ascorbic acid (powder) L-ascorbic acid (powder) from BDH, distributed exclusively for VWR, 99.7% pure, lot #45335635, was added to the trans-resveratrol solution with mild stirring to produce an ascorbic acid concentration of 6 g/L.

Solution 3 (Trans-resveratrol + ascorbic acid) - 100 ml of water was heated to about 90°C in a glass beaker. 6 mg of trans-resveratrol extract (99%, Abatra Lot #0606231) was added to the heated water with a hand blender to produce a solution having a trans-resveratrol concentration of 60 mg/L. 60 mg of ascorbic acid (powder) was added to the trans-resveratrol solution with mild stirring to produce an ascorbic acid concentration of 600mg/L.

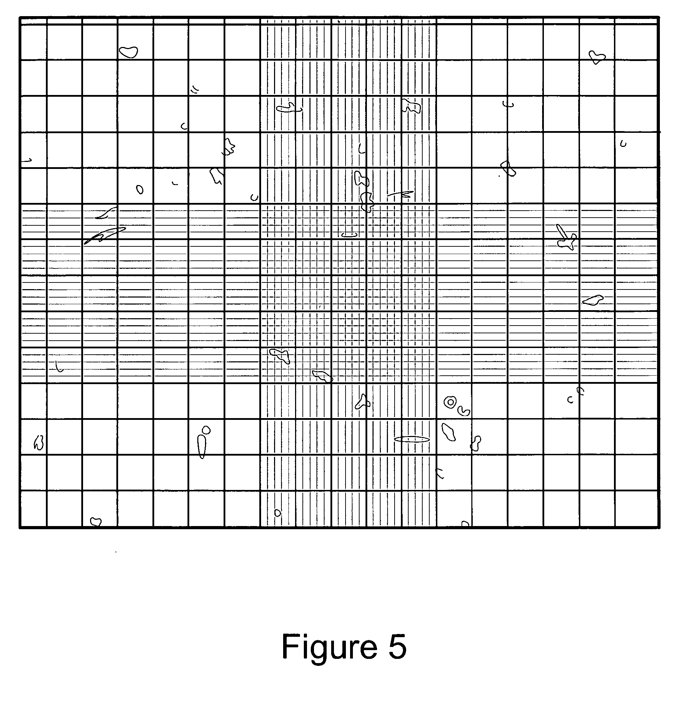

Solutions 1, 2, and 3 were subsequently transferred to separate polypropylene test tubes and frozen. Solutions 1, 2, and 3, were frozen at -20°C for 12 hours. Frozen solutions 1, 2, and 3 were subsequently thawed to room temperature. Twenty-four (24) hours post thaw, photomicrographs were taken of Solutions 1, 2, and 3 by adding a sample of each solution onto a heamocytometer. Figure 5 is a photomicrograph of Solution 1. The volume within the 25 squares in the center is 100 nanoliters. The minor grid lines are spaced 0.05 mm apart. As illustrated in Figure 5, trans-resveratrol particles were present in the solution indicating incomplete solubilization.

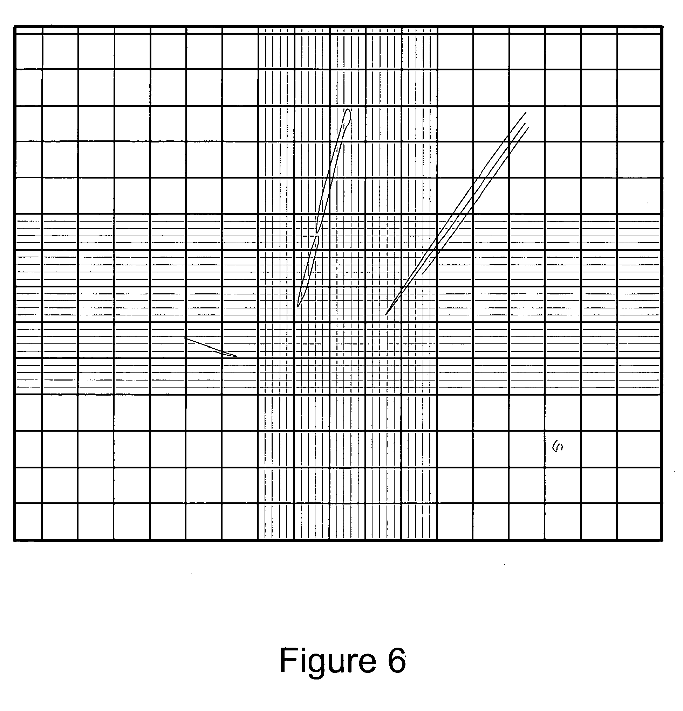

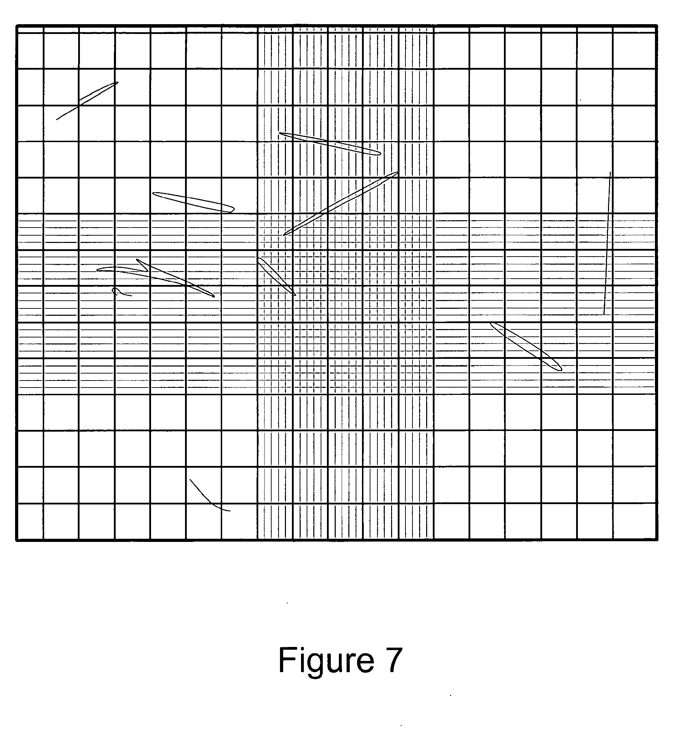

Figure 6 is a photomicrograph of Solution 2. As illustrated in Figure 6, significantly less trans-resveratrol particles are present indicating increased solubilization of the trans-resveratrol. Figure 7, a photomicrograph of Solution 3, additionally demonstrates enhanced solubilization of the trans-resveratrol in comparison to Solution 1.

The foregoing description of embodiments of the invention has been presented only for the purposes of illustration and description and is not intended to be exhaustive or to limit the invention to the precise forms disclosed. Many modifications and variations are possible in light of the above teaching. The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A beverage package for a beverage comprising an aqueous solution and a polyphenol containing compound, the package comprising a reservoir capable of isolating the polyphenol containing compound from the aqueous solution until the time of consumption.

2. A package as claimed in Claim 1, in which the polyphenol comprises trans-resveratrol

3. A package as claimed in Claim 1 or Claim 2 comprising:
a cavity; and
a sealed reservoir disposed within the cavity.

4. A package as claimed in Claim 2 or Claim 3, wherein the trans-resveratrol is in powder form.

5. A package as claimed in and one of Claims 2 to 4, wherein the trans-resveratrol is in aqueous solution.

6. A package as claimed in and one of Claims 3 to 5, further comprising a plunger operable to open the reservoir and release the trans-resveratrol into the cavity of the package.

7. A package as claimed in any one of Claims 1 to 6, wherein the package protects the trans-resveratrol from exposure to UV radiation.
